# EUROPÄISCHE PATENTSCHRIFT

(11) **EP 0 588 457 B1**
(45) Veröffentlichungstag und Bekanntmachung des Hinweises auf die Patenterteilung: **06.05.1998**
(21) Anmeldenummer: 93250243.8
(22) Anmeldetag: 08.09.1993
(51) Int. Cl.: C09J 133/08, C08J 7/02

(54) **Druckempfindlicher Haftkleber und damit hergestellte, manuell einreissbare Haftklebebänder für die Stickerei- und Textilindustrie**
Pressure-sensitive adhesive and tearable adhesive tapes produced therewith, for the embroidery and textile industry
Adhésif sensible à la pression et film adhésif déchirable pour l'industrie de la broderie et du textile

(30) Priorität: 15.09.1992 DE 4231607
(43) Veröffentlichungstag der Anmeldung: 23.03.1994
(73) Patentinhaber: HANS NESCHEN INTERNATIONAL B.V., 4824 AB Breda (NL)
(72) Erfinder: Grabemann, Jürgen, D-46244 Bottrop (DE); Hauber, Rüdiger, D-31675 Bückeburg (DE)
(74) Vertreter: UEXKÜLL & STOLBERG

(56) Entgegenhaltungen:
- EP-A- 0 118 726
- DE-A- 4 202 071
- DE-A- 4 228 436

## Beschreibung

Die Erfindung betrifft druckempfindliche Haftkleber und damit hergestellte, manuell einreißbare Haftklebebänder, die in der Stickerei- und Textilindustie dazu verwendet werden können, zu bestickende Textilien auf Arbeitsmaschinen zu fixieren. Im Zusammenhang mit der vorliegenden Erfindung soll sich der Ausdruck Haftklebebänder nicht nur auf Bänder, sondern auch auf andere flächenförmige Gebilde, beispielsweise Bögen oder Blätter, beziehen.

Stickereien sticken Motive auf Textilien mittels computergesteuerten Stickmaschinen, die je nach Art und Größe mit einer unterschiedlichen Anzahl von Stickköpfen ausgerüstet sind, wobei jeder Stickkopf mit mehreren Nadeln für verschiedenfarbige Garne bestückt ist. Das zu bestickende Textil wird auf einem Vliespapier oder einem anderen manuell einreißbaren Material fixiert.

Die Fixierunterlage wird in einen Bordürenrahmen geklebt, der sich gemäß Computerprogramm so bewegt, daß die Nadel das gewünschte Stickmotiv mit bis zu 700 Stichen pro Minute fertigt.

Geeignete flächige Materialien sind Faservliese, insbesondere Vliespapier und langfaserige Spezialpapiere, Faservliese sind textile Flächengebilde aus Textilfasern, deren Zusammenhalt durch die den Fasern eigene Haftung gegeben ist. Faservliese, die durch Verfestigung von Spinnfasern hergestellt sind, heißen Spinnvliese.

Im allgemeinen versteht man unter einem Vlies, ein Textilprodukt, in dem die Fasern gleichmäßig verteilt sind. Sie können orientiert sein oder nicht. Im Gegensatz zu gewebten Textilstoffen werden die Fasern nicht zu Garnen und zu Geweben verarbeitet, sondern durch Mischen und Verteilen zusammengelegt. Das Zusammenbinden der Fasern geschieht auf mechanischem, chemischem und/oder physikalischem Wege.

Die Vlieserzeugnisse können im Aufbau sehr unterschiedlich sein, und zwar von unzusammenhängend bis intensiv gebunden, von geschmeidig bis steif, von kompakt bis hochvoluminös. Je schwächer die Faserorientierung ist, desto besser läßt sich das Material schneiden, so daß Schnittverluste nur im sehr geringen Umfange auftreten. Entscheidend für die Eigenschaften der Faservliese sind Fasertyp, Faserfeinheit, Stapellänge und Dichte der Fasern sowie die verwendeten Bindemittel.

Als Fasern für Vliese werden Pflanzenfasern auf Cellulosebasis, tierische Wollfasern auf Proteinbasis, halbsynthetische Viskose- und Acetatcellulosefasern und synthetische Fasern auf Basis von Polyamiden, Polyacrylnitril, Polyvinylderivaten, Polyester und Polyolefinen verwendet. Unter dem Oberbegriff Faservlies sind deshalb im weiteren Sinne auch die Vliespapier auf Cellulosebasis einzuordnen, obwohl sie oft als eine spezielle Stoffklasse betrachtet werden.

Voraussetzung für den Gebrauch von Faservliesen, Spezialpapieren oder anderen flächigen Materialien als Fixierunterlage von Textilien in Stickereien ist, daß die Materialien stichfest und geschmeidig sind, so daß sie sich an den zu bestickenden Stoff gut anlegen und die Plastizität des Stickmotivs verbessern. Des weiteren müssen sie auch nach dem Sticken außerhalb der Motivränder leicht und problemlos manuell abreißbar sein.

In der Vergangenheit haben die Stickereien Vliesmaterialien mit einem Sprühkleber besprüht, der aus Polyvinylester-Copolymerisaten wie. z.B. Polyacrylsäure-Copolymerisaten besteht und in Fluorkohlenwasserstoffen gelöst ist. Als Treibgas für solche Sprühkleber dienen Aerosole auf Basis von Fluorchlorkohlenwasserstoffen. Beim Sprühen und Trocknen des Klebers entstehen umweltbelastende Gase. Neben der unerwünschten Gasbildung weist der Sprühkleber vor allem in der Anwendung entscheidende Nachteile aus: Er ist so schmierig, daß Kleberreste nach kurzer Stickzeit im Nadelkanal haften und eine ordnungsgemäße Fadenführung verhindern. Die Haftung des zu bestickenden Stoffes auf dem Sprühklebervlies ist oft zu schwach. Wenn sich der Textilstoff während des Stickvorganges verschiebt, wird das Stickmuster fehlerhaft und unbrauchbar. Außerdem verlackt der Sr pühkleber nach kurzer Zeit und verliert seine Klebeeigenschaften.

Nachteilig ist auch, daß der Sprühkleber herkömmliche Vliespapiere, da nicht genau dosierbar, anweicht und somit bei großflächiger Beschichtung das Trägermaterial instabil werden läßt.

Es war daher, um Web- und Maschinenwaren im Bereich der Stickerei bislang verarbeiten zu können, notwendig, das Trägermaterialvlies mittels eines Textilklebesprays zu beschichten, um dann das zu bestickende Gut zu fixieren. Unter "Fixieren" versteht man eine Stabilisierung der Maschen oder Gewebe des zu bestickenden Materials. Beim Sprühen von größeren Flächen treten hier durch eine manuell durchgeführte Tätigkeit ungleichmäßige Beschichtungen auf, welche
a) zu Ablösung des Stickgutes führen kann und
b) da keine genaue Dosierung möglich ist, bei empfindlichen Materialien (Chiffon, Seide, Jersey usw.) Fleckenbildung entstehen läßt.

Fernerhin wird bei zu starker Besprayung das Vlies angeweicht, wodurch eine Instabilität entsteht. Das Stickgut wird in diesem Fall in seiner Fadenlage deformiert und hierdurch unsauber.

Des weiteren wird bei einer zu starken Besprayung sowohl der Faden als auch der Fadenkanal der Nadel behaftet, hieraus resultiert keine saubere Schlingenbildung oder aber ein Haften des Fadens im Fadenkanal der Nadel, so daß bei der Schlingenaufnahme des Doppelumlaufgreifers keine zeitliche Übereinstimmung gegeben ist und dies zu Fadenreißen, Fehlstichen und somit Standzeiten der Maschine führt.

Eine Alternative war der Einsatz von Thermovlies. Bei Thermovlies handelt es sich um Spinn- oder Maschenvliese, welche mittels eines temperaturlöslichen Klebers beschichtet sind.

Thermovliese werden eingesetzt bei extrem dehnbarer Maschenware, um die Faser zu fixieren, wobei auch diese Vliese an bestimmten Teilen eines Textils nach dem Besticken entfernt werden müssen. Im Einsatzbereich der Tricot-Stoffe ist das Handling o.g. Vlieses bislang sehr diffizil zu betrachten, da
a) bei zu starker Temperatur eine Verfärbung des Stickmaterials auftritt und fernerhin das Vlies schwer bis überhaupt nicht sauber zu entfernen ist ohne das Stickbild zu verzerren (Eine weitere unangenehme Eigenschaft sind die Rückstände (Klebepartikel) am Stickgut.) und
b) um Thermovlies optimal einsetzen zu können, es eines teuren Zusatzmaschinen-Aufwandes bedarf (Fixierpressen, Durchlauffixieranlagen oder Bügeleisen).

Bei Einsatz von Bügeleisen ist auch hier eine gleichmäßige Haftung nicht gegeben, da die Flächenerhitzung und Auskühlung nicht lineare kontrolliert werden kann. Hieraus resultierend ist bei einem längeren Stickvorgang eine unkontrollierte Ablösung des Materials. Die Verwendung eines Thermovlies im Vorlauf für eine größere Produktionspalette scheidet aus, da sich das fixierte Material nur auf einer geraden Ebene lagern läßt und somit sehr kostenintensiv ist.

Es stellt sich nun die Frage, ob nicht ein selbstklebend ausgerüstetes Vliesmaterial besser für diese Anwendung geeignet ist als ein Sprühklebervlies. Druckempfindliche Selbstklebemassen oder Haftkleber werden schon seit langem in Form von Haftklebebändern in Industrie, Handwerk und Haushalten überall eingesetzt. Aus der Patentliteratur sind zahlreiche Beispiele für die Herstellung von Kautschuk- und Polyacrylsäureesterhaftkleber auf Basis von organischen Lösungsmitteln und wäßrigen Dispersionen bekannt. In den DE-OS 36 43 987, DE-OS 38 43 421 und EP 0 141 504 sind Copolymerisate von Acrylsäureestern, Acrylsäure und anderen Monomeren beschrieben. In der DE-OS 30 18 131 werden Haftkleber aus Polyacrylsäureestern und Polyisocyanaten auf Lösungsmittelbasis erörtert. Emulsionshaftkleberpolymerisate von n-Butylacrylat, 2-Ethylhexylacrylat, Acrylsäure, Acrylnitril, Vinylacetat, Methylmethacrylat und anderen Monomeren werden beispielsweise in den Patentschriften EP 0 130 080, EP 0 193 295, EP 0 258 753, DE 31 47 007, DE 33 13 922, DE 35 31 601, DE 38 29 077, DE 37 01 757 und DE 38 08 706 beschrieben.

Ferner ist aus der DE 42 02 071 A1 beispielsweise ein druckempfindlicher Haftkleber bekannt, der ein Gemisch von
a) 10 - 90 Gewichtsteilen Acrylsäureester-Acrylsäure-Copolymerisaten, die Acrylsäureestereinheiten mit 2 bis 8 Kohlenstoffatomen in der Alkoholkomponente und, bezogen auf diese Copolymerisate, 1 - 10 Gew.% Acrylsäure aber keine oder weniger als 2 Gew.% intern vernetzenden Gruppen enthalten, und
b) 10 - 60 Gewichtsteilen Acrylsäureester-Acrylsäure-Copolymeisaten, die Acrylsäureestereinheiten mit 2 bis 8 Kohlenstoffatomen in der Alkoholkomponente enthalten und, bezogen auf diese Copolymerisate, 1 - 10 Gew.% Acrylsäure enthalten, wobei in die Copolymerisate 2 - 20 Gew.% Vinyl- ester und/-oder Acrylsäureestermonomere einpolymerisiert sind, die intern vernetzende Gruppen enthalten,
sowie gegebenenfalls üblichen Zusatzstoffen umfaßt.

Alle beschriebenen Haftkleber auf Polyacrylsäureesterbasis weisen hinsichtlich ihrer Verwendung für selbstklebende Vliesmaterialien in Textilstickereien Mängel auf, die ihre Einsatzmöglichkeit verhindern oder erheblich einschränken. Anwendungstechnische Untersuchungen haben ergeben, daß entweder die Haftkleber Nadelkanäle sehr schnell verstopfen bzw. verkleben oder mangelhaft auf den Vliesmaterialien haften, so daß sie beim Entfernen der Textilstoffe auf diese umspulen. Andere Haftkleber sind auf Vliesmaterialien gut verankert, hinterlassen aber Kleberreste auf den Textilien. Viele Haftkleber migrieren teilweise in die Vliesmaterialien und in die Textilien. Eingenähte Vliesstücke können beim Bügeln, Waschen oder Reinigen Textilstoffe im Stikkereibereich durch niedermolekulare Kleberbestandteile unter Fleckenbildung verschmutzen.

Aufgabe der Erfindung ist es, einen druckempfindlichen Haftkleber für Vliesmaterialien in Stickereien zu entwickeln, der die oben geschilderten Nachteile nicht aufweist und auf Vliesmaterialien problemlos als Fixierkleber für zu bestickende Textilien eingesetzt werden kann. Auch bei hohen Stickgeschwindigkeiten soll der Kleber Nadelkanäle über einen längeren Zeitraum nicht verstopfen.

Die Aufgabe wird durch einen druckempfindlichen Haftkleber gelöst, der aus einem Gemisch folgender Komponenten sowie gegebenenfalls üblichen Zusatzstoffen besteht:
A) 5 bis 50 Gew.-% Acrylsäureester-Vinylacetat-Acrylsäure-Copolymerisat mit 2 bis 8 Kohlenstoffatomen in der Alkoholkomponente des Acrylsäureesters und bezogen auf das Copolymerisat 10 bis 60 Gew.-%, insbesondere 15 bis 55 Gew.-% Vinylacetat und 1 bis 10 Gew.-%, insbesondere 2 bis 8 Gew.-% Acrylsäure (K-Wert nach Fikentscher im Bereich von 50 bis 110 (gemessen gemäß DIN 51562 in Tetrahydrofuran)),
B) 10 bis 80 Gew.-%, insbesondere 10 bis 75 Gew.-%, bevorzugt 10 bis 67 Gew.-% und speziell 10 bis 60 Gew.-% Acrylsäureester-Acrylsäure-N-Methylolmethacrylamid-Copolymerisat mit 4 bis 8 Kohlenstoffatomen in der Alkoholkomponente des Acrylsäureesters und bezogen auf das Copolymerisat 1 bis 10 Gew.-%, insbesondere 2 bis 8 Gew.-% Acrylsäure sowie 1 bis 10 Gew.-%, insbesondere 2 bis 8 Gew.-% selbstvernetzendes N-Methylolmethacrylamid (K-Wert nach Fikentscher im Bereich von 70 bis 130 (gemäß DIN 51562 in Tetrahydrofuran)),
C) 10 bis 90 Gew.-%, insbesondere 10 bis 85 Gew.-% Acrylsäureester-Ethylacrylat-N-Methylol-methacrylamid-Acryisäure-Copolymerisat mit 4 bis 8 Kohlenstoffatomen in der Alkoholkomponente des Acrylsäureesters und bezogen auf das Copolymerisat 1 bis 10 Gew.-%, insbesondere 2 bis 8 Gew.-% Acrylsäure sowie 1 bis 10 Gew.-%, insbesondere 2 bis 8 Gew.-% selbstvernetzendes N-Methylolmethacrylamid und 20 bis 80, insbesondere 20 bis 60 Gew.-% und vorzugsweise 25 bis 55 Gew.-% Ethylacrylat (K-Wert nach Fikentscher im Bereich von 80 bis 130 (gemessen DIN 51562 in Tetrahydrofuran)),
D) 0 bis 25 Gew.-%, insbesondere 0 bis 20 Gew.-% Phthalsäureester mit 2 bis 12 Kohlenstoffatomen in der Alkoholkomponente des Esters.

Komponente A) ist in einer Menge von 5 bis 50, bevorzugt 13 bis 50 und speziell 10 bis 50 Gew.-% vorhanden. Komponente C) ist in einer Menge von 10 bis 90 und speziell 20 bis 90 Gew.-% vorhanden. Falls Komponente D) vorhanden ist, ist sie vorzugsweise in einer Menge von 5 bis 20 und bevorzugt 10 bis 20 Gew.-% vorhanden.

Die Haftkleberkomponenten werden nach den üblichen Verfahren der Patentliteratur hergestellt.

Vorzugsweise haben Komponente A einen K-Wert von 60 bis 100, Komponente B einen K-Wert von 80 bis 120 und Komponente C einen K-Wert von 90 bis 120.

In die Copolymerisate der Mischungskomponenten A) bis C) können in geringen Mengen weitere Monomere wie z.B. Methacrylsäurester, Methacrylsäure,(Meth)acrylnitril , Hydroxyethylacrylat und Styrol einpolymerisiert werden. Die Monomeren können bezogen auf die Copolymerisate in Mengen von 0,25 bis 25, bevorzugter 0,5 bis 20 Gew.-% und insbesondere 1 bis 15 Gew.-% in den Copolymerisaten enthalten sein. Bei den Acrylsäureesterkomponenten in den Copolymerisaten handelt es sich vorzugsweise um n-Butylacrylat und/oder 2-Ethylhexylacrylat.

Das erfindungsgemäße Gemisch liegt vorzugsweise als wäßrige, mit Ammoniakwasser auf einen pH-Wert von 7 bis 8, vorzugsweise 7 bis 7,5, eingestellte Dispersion vor. Es wird in Mengen von 5 bis 50 g/m², insbesondere 10 bis 45 g/m² auf Trägermaterialien ausgestrichen, zu einem selbstklebenden Film getrocknet und mit einem adhäsiven Trennmaterial abgedeckt.

Die wäßrigen Copolymerisatdispersionen enthalten die in der Literatur üblichen anionischen Emulgatoren, wie sie z.B. in dem Buch "Methoden der organischen Chemie" von Houben-Weyl, Band 14/1, Makromolekulare Stoffe, Georg-Thieme-Verlag, Stuttgart 1972, Seiten 192 bis 208 beschrieben sind.

Um eine gleichmäßige Beschichtung und eine gute Filmbildung zu erzielen, werden der Dispersion in üblichen Mengen (0,5 bis 5,0, insbesondere 0,1 bis 2,0 %) Zusatzstoffe wie Verdicker, Netzmittel und Entschäumer zugegeben.

Die Erfindung betrifft ferner die Verwendung des erfindungsgemäßen druckempfindlichen, kalt verwendbaren Haftklebers zur ein- und beidseitigen Beschichtung von Trägermaterialien wie Faservliesen, Vliespapieren und langfaserigen Spezielpapieren im Bereich von 15 bis 100 g/m², vorzugsweise 20 bis 40 g/m².

Es wird ein flächenförmiges, dünnes und transparentes Trennmaterial wie silikonisiertes Papier oder silikonisierte Folien mit der wäßrigen Dispersion beschichtet. Beim Trocknen der Dispersion entsteht in Auftragsstärken von 5 bis 50 g/m² und vorzugsweise 10 bis 45 g/m² ein druckempfindlicher Haftkleberfilm, der auf Trägermaterialien kaschiert wird. Als Trägermaterial eignen sich insbesondere Faservliese und Vliespapiere auf Cellulosebasis.

Die so beschichteten Substrate, die manuell einreißbar sind, dienen als Fixierklebebänder in Textilstickereien. Leichte Textilien wie z.B. leichte Baumwolle, Jersey und Seide sowie schwere Textilien wie z.B. Berufskleidung aus schwerer Baumwolle oder Wolle, Frottee und Jeans haften bei geringem Ausdruck gut auf beschichteten Vliespapieren.

Die auf selbstklebendem Vliespapier fixierten Textilien wurden mit einer Geschwindigkeit von ca. 700 Nadelstichen pro Minute bestickt. Nach 10 minütiger Stickzeit blieben Nadelöhr und Nadelkanal frei von Kleberrückständen. Ein Verrutschen der Textilien während des Stickvorganges wurde nicht beobachtet. Anschließend ließ sich das Vliespapier außerhalb der Stickmotivränder leicht und kleberrückstandsfrei abreißen.

Wenn das bestickte Textil auf einen Textilstoff aufgenäht wird, ist es üblich, das selbstklebende Vliespapier auf der bestickten Textilrückseite nicht zu entfernen, sondern als plastizierende Einlage einzunähen. Bügel-, Wasch- und Reinigungsversuche haben ergeben, daß der Haftkleber und das Vliespapier die Textilqualität nicht beeinträchtigen.

Das neuentwickelte Material ist als textilschonendes und im Handling einfaches Material einzuordnen. Da bei seiner Verarbeitung weder Gase noch Dämpfe freigesetzt werden. Fernerhin ist es möglich, es durch geringen Andruck auf das zu bestickende Material aufzubringen (Kaltfixieren), welches auf Wirk-, Maschen- und Gewebematerialien schonend ist. Da das zu bearbeitende Material aufgestrichen werden kann, wird eine Deformierung des Grundmaterials vermieden. Der Einsatz in Bordüren- oder Einzelstickrahmen hat den Vorteil, daß das zu bestickende Material nicht mehr geklemmt werden muß, sondern durch den aufgebrachten Film gehalten wird.

Da der erfindungsgemäße Haftkleber weder nebelt noch anweicht, wird die gesamte Mechanik und Elektronik einer computergesteuerten Stickmaschine geschont. Da der gebildete Haftfilm so eingestellt werden kann, daß weder die Nadel noch der Greifer sich mit Kleber zu setzen, ist hier eine erheblich höhere Auslastung der Maschinen möglich. Fernerhin werden die Wartungszeiträume verlängert. Der Klebstoff geht auch keine Verbindung mit unterschiedlichen Garnarten ein. Das Stickbild wird durch die gleichmäßige Haftung ebenfalls verbessert.

Bei einem Bordürenrahmen wird eine Bahn von 3,20 m x 0,45 m mittels mechanischer Klammern mit dem Stickrahmen verbunden. Danach wird das Silikonpapier entfernt und das zu bestickende Gut durch Andruck mit dem Klebeband verbunden. Hierdurch entsteht eine Stabilisierung des Stickgutes, so daß eine Deformierung der Maschen nicht mehr entstehen kann. Da auch der Einsatz von thermischen Erhitzen (Bügeleisen) entfällt, wird die Faser vor dem Stickvorgang nicht mehr ungleichmäßig erwärmt oder überhitzt, so daß das zu bestickende Material geschont wird. Dieser Vorgang gilt auch für den Einsatz von Einzelrahmen, welche z.B. bei Fertigteilen verwendet werden.

Der Bordürenrahmen oder Einzelrahmen wird mittels Schrittmotoren gemäß des erstellten Programmes bewegt (Transport). Die Nadel behält ihre Stellung und vollzieht beim Stickvorgang eine Auf- und Abwärtsbewegung. Wichtig ist, daß bei Stickmaschinen die Geschwindigkeit gemäß Stichart, Stichlänge und Stichlage bestimmt wird. Hier bietet das erfindungsgemäß hergestellte Material den immensen Vorteil, einer linearen Flächenhaftung.

Im folgenden wird die Erfindung anhand von Beispielen näher erläutert.

### Beispiele 1 bis und 2

In Tabelle 1 sind zwei verschiedene Rezepturen für den erfindungsgemäßen Haftkleber in Form wäßriger Dispersionen angegeben. Die Gewichtsprozente der Rezepturen beziehen sich auf 100 % Festkörper, d.h. Wasseranteile sind darin nicht enthalten. Die Dispersionen wurden auf einseitig silikonisierten Papieren (67 g/m²) so aufgetragen, daß nach dem Trocknen Klebstoffilme mit ca. 10 g/m² Kleber entstanden sind. Die Klebstoffbeschichtungen wurden auf Vliespapier (ca. 30 g/m²) kaschiert.

**Tabelle 1**

| | 1 | 2 |
|---|---|---|
| Acrylsäureester-Vinylacetat-Acrylsäure-Copolymerisat | 24 | 25 |
| Acrylsäureester-Acrylsäure-N-Methylolmethacrylamid-Copolymerisat | 41 | 45 |
| Acrylsäureester-Ethylacrylat-N-Methylolmethacrylamid-Acrylsäure-Copolymerisat | 35 | 20 |
| Phthalsäureester | - | 10 |

An den mit den Klebstoffrezepturen 1 und 2 hergestellten, selbstklebenden Vliespapieren wurden Klebkraftmessungen gemäß Afera-Norm 4001 (Sofortmessung) durchgeführt, jedoch nicht auf Stahl, da das Vliespapier häufig rupft oder spaltet, sondern anwendungsgerecht auf diversen Textilien. In der folgenden Tabelle 2 sind die Meßergebnisse angeführt.

**Tabelle 2**

| | | 1 | 2 |
|---|---|---|---|
| Klebkraft Vliespapier gegen Baumwolle | N/cm | 0,07 | 0,10 |
| Nylonlycra (Synthetik) | " | 0,10 | 0,12 |
| Polyesterwolle | " | 0,45 | 0,44 |
| Chiffonseide | " | 0,18 | 0,18 |
| Leinen | " | 0,26 | 0,39 |
| Mischgewebe aus Synthetik und Baumwolle | " | 0,18 | 0,27 |

Vliespapiermusterstreifen mit den Haftkleberezepturen 1 und 2 wurden 6 Wochen bei 70°C gelagert und anschließend auf verschiedenen Textilien die Klebkraft ermittelt. Ein Klebkraftabfall wurde nicht beobachtet.

## Patentansprüche

1. Druckempfindlicher Haftkleber, dadurch gekennzeichnet, daß er ein Gemisch von
A) 5 bis 50 Gew.-% Acrylsäureester-Vinylacetat-Acrylsäure-Copolymerisat mit 2 bis 8 Kohlenstoffatomen in der Alkoholkomponente des Acrylsäureesters und bezogen auf das Copolymerisat 10 bis 60 Gew.-% Vinylacetat und 1 bis 10 Gew.-% Acrylsäure (K-Wert nach Fikentscher im Bereich von 50 bis 110 - gemessen gemäß DIN 51562 in Tetrahydrofuran),
B) 10 bis 80 Gew.-% Acrylsäureester-Acrylsäure-N-Methylolmethacrylamid-Copolymerisat mit 4 bis 8 Kohlenstoffatomen in der Alkoholkomponente des Acrylsäureesters und bezogen auf das Copolymerisat 1 bis 10 Gew.-% Acrylsäure sowie 1 bis 10 Gew.-% selbstvernetzendes N-Methylolmethacrylamid (K-Wert nach Fikentscher im Bereich von 70 bis 130 - gemessen gemäß DIN 51562 in Tetrahydrofuran),
C) 10 bis 90 Gew.-% Acrylsäureester-Ethylacrylat-N-Methylolmethacrylamid-Acrylsäure-Copolymerisat mit 4 bis 8 Kohlenstoffatomen in der Alkoholkomponente des Acrylsäureesters und bezogen auf das Copolymerisat 1 bis 10 Gew.-% Acrylsäure sowie 1 bis 10 Gew.-% selbstvernetzendes N-Methylolmethacrylamid und 20 bis 80 Gew.-% Ethylacrylat (K-Wert nach Fikentscher im Bereich von 80 bis 130 - gemessen gemäß DIN 51562 in Tetrahydrofuran),
D) 0 bis 25 Gew.-% Phthalsäureester mit 2 bis 12 Kohlenstoffatomen in der Alkoholkomponente des Esters umfaßt.

2. Druckempfindlicher Haftkleber nach Anspruch 1, dadurch gekennzeichnet, daß die Acrylsäureesterkomponenten in den Copolymerisaten n-Butylacrylat und/oder 2-Ethylhexylacrylat enthalten.

3. Druckempfindlicher Haftkleber nach Anspruch 1 oder 2, dadurch gekennzeichnet, daß in die Copolymerisate weitere Monomere, vorzugsweise Methacrylsäureester, Methacrylnitril, Methacrylsäure, Acrylnitril, Hydroxyethylacrylat und Styrol einpolymerisiert sind.

4. Druckempfindlicher Haftkleber nach einem der Ansprüche 1 bis 3, dadurch gekennzeichnet, daß die weiteren Monomeren in Mengen von 0,25 bis 25 Gew.-% in die Copolymerisate einpolymerisiert sind.

5. Druckempfindlicher Haftkleber nach einem der Ansprüche 1 bis 4, dadurch gekennzeichnet, daß er als wäßrige Dispersion vorliegt.

6. Druckempfindlicher Haftkleber nach einem der Ansprüche 1 bis 5, dadurch gekennzeichnet, daß der pH-Wert der wäßrigen Dispersion mit Ammoniakwasser auf etwa 7 bis 8 eingestellt ist.

7. Verwendung des druckempfindlichen Haftklebers nach eienm der Ansprüche 1 bis 6 zur Herstellung von ein- oder beidseitig beschichteten, selbstklebenden, flächigen Substraten.

8. Verwendung nach Anspruch 7, dadurch gekennzeichnet, daß die flächigen Substrate Faservliese sind.

9. Verwendung nach Anspruch 6 oder 7, dadurch gekennzeichnet, daß die flächigen Substrate Vliespapiere oder langfaserige Spezialpapiere mit Gewichten von 15 bis 100 g/m² sind.

10. Haftklebeband, dadurch gekennzeichnet, daß es einen Klebstoff gemäß einem der Ansprüche 1 bis 6 umfaßt.

## Claims

1. Pressure-sensitive contact adhesive, characterized in that it comprises a mixture of
A) 5 to 50 wt.% acrylic acid ester-vinyl acetate-acrylic acid copolymer with 2 to 8 carbon atoms in the alcohol component of the acrylic acid ester and, relative to the copolymer, 10 to 60 wt.% vinyl acetate and 1 to 10 wt.% acrylic acid (K value according to Fikentscher in the range from 50 to 110 - measured according to DIN 51562 in tetrahydrofuran),
B) 10 to 80 wt.% acrylic acid ester-acrylic acid-N-methylol methacrylamide copolymer with 4 to 8 carbon atoms in the alcohol component of the acrylic acid ester and, relative to the copolymer, 1 to 10 wt.% acrylic acid and 1 to 10 wt.% self-crosslinking N-methylol methacrylamide (K value according to Fikentscher in the range from 70 to 130 - measured according to DIN 51562 in tetrahydrofuran),
C) 10 to 90 wt.% acrylic acid ester-ethyl acrylate-N-methylol methacrylamide-acrylic acid copolymer with 4 to 8 carbon atoms in the alcohol component of the acrylic acid ester and, relative to the copolymer, 1 to 10 wt.% acrylic acid and 1 to 10 wt.% self-crosslinking N-methylol methacrylamide and 20 to 80 wt.% ethyl acrylate (K value according to Fikentscher in the range from 80 to 130 - measured according to DIN 51562 in tetrahydrofuran),
D) 0 to 25 wt.% phthalic acid ester with 2 to 12 carbon atoms in the alcohol component of the ester.

2. Pressure-sensitive contact adhesive according to claim 1, characterized in that the acrylic acid ester components in the copolymers contain n-butyl acrylate and/or 2-ethylhexyl acrylate.

3. Pressure-sensitive contact adhesive according to claim 1 or 2, characterized in that further monomers, preferably methacrylic acid ester, methacrylonitrile, methacrylic acid, acrylonitrile, hydroxyethyl acrylate and styrene are polymerized into the copolymers.

4. Pressure-sensitive contact adhesive according to one of claims 1 to 3, characterized in that the further monomers are polymerized into the copolymers in quantities of 0.25 to 25 wt.%.

5. Pressure-sensitive contact adhesive according to one of claims 1 to 4, characterized in that it is present as an aqueous dispersion.

6. Pressure-sensitive contact adhesive according to one of claims 1 to 5, characterized in that the pH value of the aqueous dispersion is set at about 7 to 8 with ammonia water.

7. Use of the pressure-sensitive contact adhesive according to one of claims 1 to 6 for the production of self-adhesive laminar substrates coated on one or both sides.

8. Use according to claim 7, characterized in that the laminar substrates are fibre fleeces.

9. Use according to claim 6 to 7, characterized in that the laminar substrates are fleece papers or long-fibred special papers with weights of 15 to 100 g/m².

10. Contact adhesive tape, characterized in that it comprises an adhesive according to one of claims 1 to 6.

## Revendications

1. Substance adhésive ou autocollante sensible à la pression, caractérisée en ce qu'elle comprend un mélange de
A) 0 à 90 % en poids de copolymères de l'acide acrylique-vinylacétate-ester de l'acide acrylique avec 2 à 8 atomes de carbone dans le composant alcool de l'ester de l'acide acrylique et rapportés aux copolymères 10 à 60 % en poids de vinylacétate et 1 à 10 % en poids de l'acide acrylique (valeur K selon Fikentscher dans la plage de 50 à 110 - mesurée selon la norme DIN 51562 dans du tétrahydrofuranne).
B) 10 à 80 % en poids de copolymères-N-méthylolméthacrylamide-acide acrylique-ester de l'acide acrylique avec 4 à 8 atomes de carbone dans le composant alcool de l'ester de l'acide acrylique et rapportés aux copolymères 1 à 10 % en poids de l'acide acrylique ainsi que 1 à 10 % en poids de N-méthylolméthacrylamide autoréticulant (valeur K selon Fikentscher dans la plage de 70 à 130 - mesurée selon la norme DIN 51562 dans du tétrahydrofuranne).
C) 0 à 90 % en poids de copolymère-acide acrylique-N-méthylolméthacrylamide-éthylacrylate-ester de l'acide acrylique avec 4 à 8 atomes de carbone dans le composant alcool de l'ester de l'acide acrylique et rapportés aux copolymères 1 à 10 % en poids d'acide acrylique ainsi que 1 à 10 % en poids de N-méthylolméthacrylamide autoréticulant et 20 à 80 % en poids d'éthylacrylate (valeur K selon Fikentscher dans la plage de 80 à 130 - mesurée selon la norme DIN 51562 dans le tétrahydrofuranne).
D) O à 25 % en poids d'ester de l'acide phtalique avec 2 à 12 atomes de carbone dans le composant alcool de l'ester,
mélange dans lequel en plus du composant B est présent au moins l'un des composants A ou C.

2. Substance adhésive ou autocollante sensible à la pression selon la revendication 1, caractérisée en ce que les composants de l'ester de l'acide acrylique dans les copolymères contiennent du N-butylacrylate et/ou du 2-éthylhexylacrylate.

3. Substance adhésive ou autocollante sensible à la pression selon la revendication 1 ou 2, caractérisée en ce que dans les copolymères sont polymérisés d'autres monomères, de préférence de l'ester de l'acide méthacrylique, du nitrile méthacrylique, de l'acide méthacrylique, du nitrile acrylique, de l'hydroxyéthylacrylate et du styrol.

4. Substance adhésive ou autocollante sensible à la pression selon l'une des revendications 1 à 3, caractérisée en ce que les autres monomères sont polymérisés dans des quantités de 0,25 à 25 % en poids dans les copolymères.

5. Substance adhésive ou autocollante sensible à la pression selon l'une des revendications 1 à 4, caractérisée en ce qu'elle se présente sous forme de dispersion aqueuse.

6. Substance adhésive ou autocollante sensible à la pression selon l'une des revendications 1 à 5, caractérisée en ce que la valeur du pH de la dispersion aqueuse est ajustée avec de l'eau ammoniacale jusqu'à environ 7 à 8.

7. Utilisation de la substance adhésive ou autocollante selon l'une des revendications 1 à 6, pour la préparation de substrats plats, autocollants, revêtus sur un côté ou sur les deux côtés.

8. Utilisation selon la revendication 7, caractérisée en ce que les substrats plats sont des nappes ou matelas de fibres.

9. Utilisation selon la revendication 6 ou 7, caractérisée en ce que les substrats plats sont des papiers en nappes ou des papiers spéciaux à fibres longues d'un poids de 15 à 100 g/m².

10. Bande adhésive, caractérisée en ce qu'elle comporte une substance adhésive selon l'une des revendications 1 à 6.
